Europäisches Patentamt

European Patent Office

Office européen des brevets

(11) Veröffentlichungsnummer: **0 033 150**
**B1**

(12) **EUROPÄISCHE PATENTSCHRIFT**

(45) Veröffentlichungstag der Patentschrift:
**10.07.85**

(21) Anmeldenummer: **81100517.2**

(22) Anmeldetag: **24.01.81**

(51) Int. Cl.⁴: **F 16 B 2/00**

(54) **Befestigungswinkel.**

(30) Priorität: **26.01.80 DE 8002055 U**

(43) Veröffentlichungstag der Anmeldung:
**05.08.81 Patentblatt 81/31**

(45) Bekanntmachung des Hinweises auf die Patenterteilung:
**10.07.85 Patentblatt 85/28**

(84) Benannte Vertragsstaaten:
**AT BE CH FR GB IT LI LU NL SE**

(56) Entgegenhaltungen:
**FR - B - 2 239 143**
**GB - A - 1 321 547**
**US - A - 3 144 105**
**US - A - 3 307 863**

**Prot. Hildebrand, "Feinmech. Bauelemente", S. 596-598**
**DIN 9870, B1,2, S. 251, 254, 262, 265**

(73) Patentinhaber: **Fischbach GmbH & Co.KG,**
**Postfach 1760 Am Hellerberg,**
**D-5908 Neunkirchen/Siegerland 1 (DE)**

(72) Erfinder: **Seibel, Rudolf, In der Daadenbach 2,**
**D-5908 Neunkirchen (DE)**

(74) Vertreter: **Boecker, Joachim, Dr.-Ing.,**
**Rathenauplatz 2-8, D-6000 Frankfurt a.M. 1 (DE)**

## Beschreibung

Die Erfindung betrifft einen Befestigungswinkel gemäß dem Oberbegriff des Anspruches 1.

Solche Befestigungswinkel werden insbesondere zum Ansetzen an Profilstangen verwendet, aus denen Gehäuserahmen aufgebaut werden, in denen Einbauelemente befestigt werden. Der Befestigungswinkel bildet dabei das Verbindungsglied zwischen einer Profilstange und einem Einbauelement. Solche Einbauelemente sind beispielsweise Luftkühler, Wärmeaustauscher, Ventilatoren oder Filter. Aus Platzgründen ist es bei diesem Einbau häufig nicht möglich, die Schrauben oder sonstigen Befestigungsmittel, mit denen das Einbauelement am Flansch des Befestigungswinkels befestigt werden soll, in Längsrichtung des Befestigungsloches in den Flansch des Befestigungswinkels einzuführen. Aus diesem Grunde werden die Befestigungsschrauben, die schon in ein Gewindeloch des Einbauelementes locker eingeschraubt oder durch ein Befestigungsloch des Einbauelementes durchgesteckt sein können, mit dem Einbauelement an den Befestigungswinkel gehoben und durch einen das Befestigungsloch des Flansches mit dem Rand des Flansches verbindenden Schlitz in einer Bewegung senkrecht zur Längsrichtung des Befestigungsloches eingeführt. Dabei gelangen die Einbauelemente häufig in eine Lage, aus der sie durch ihr Eigengewicht wieder durch den Schlitz herausfallen können. Es ist daher erforderlich, daß in umständlicher Weise, in der Regel durch eine Hilfsperson, das Einbauelement in der eingeschobenen Lage gehalten werden muß, bis das Befestigungselement festgezogen worden ist.

Aus der US-A-3 144 105 ist eine für den Hochbau bestimmte Verbindungsvorrichtung bekannt, die zur Verbindung zweier sich kreuzender und aneinander liegender I-Träger dient. Die Verbindungsvorrichtung besteht aus zwei identischen Teilen, von denen jedes im wesentlichen eine L-Form hat. Die Schenkelenden der beiden L-förmigen Teile können paarweise derart locker miteinander verbunden werden, daß die beiden L-förmigen Teile einen zusammenhängenden Verbinder bilden, der als Einheit transportiert und gehandhabt werden kann. Zur Herstellung der Verbindung zwischen den beiden Teilen befindet sich in dem einen Schenkelende ein Langloch, in das der Schaft eines im Schenkel des anderen Teils befindlichen Schraubbolzens seitlich hineingeschoben werden kann. Am freien Ende des das Langloch begrenzenden Steges befindet sich eine vorstehende Nase, die ein Zurückgleiten des Schraubbolzens aus dem Langloch verhindert, sobald dieser im eingeschobenen Zustand etwas tiefer eingedreht wird. In diesem lose zusammenhängenden Zustand kann der Verbinder auf die Flansche der I-Träger aufgeschoben werden, worauf anschließend die Schrauben angezogen werden, wodurch eine klemmende Verbindung zwischen den I-Trägern entsteht. Dadurch, daß sich die den Schraubbolzen blockierende Nase am äußersten Ende des Langloches befindet, ist ohne endgültiges Anziehen der Schraube ein vorübergehender Halt in der endgültigen Position nicht erreichbar. Außerdem könnte die Fläche der Nase, an der der Schraubbolzen anliegt, nur mit großem Aufwand der Form der Schraube angepaßt werden.

Der Erfindung liegt die Aufgabe zugrunde, einen Befestigungswinkel der eingangs genannten Art zu entwickeln, bei dem ein ungewolltes Herausrutschen der in den Befestigungswinkel eingesetzten Einbauelemente ohne Anbringung einer äußeren gegenhaltenden Kraft verhindert werden kann.

Zur Lösung dieser Aufgabe wird ein Befestigungselement der eingangs genannten Art vorgeschlagen, welches die im kennzeichnenden Teil des Anspruches 1 genannten Merkmale hat.

Vorteilhafte Weiterbildungen der Erfindung sind in den Unteransprüchen genannt.

Dank der erfindungsgemäß am Befestigungswinkel vorgesehenen Vorsprünge kann ein Zurückrutschen des in den Befestigungswinkel eingeschobenen Einbauelementes durch geringfügige Axialverschiebung des Befestigungselementes verhindert werden, woraufhin die Bedienungsperson beide Hände zum Festsetzen des Befestigungselementes frei hat. Durch die erfindungsgemäße Ausbildung des Vorsprunges kann auf einfache Weise die Fläche, gegen die das Befestigungselement blockierend anliegt, an jeder beliebigen Stelle des Schlitzes positioniert werden. Die Blockierung kann somit bereits in der endgültigen Position des Einbauelementes vorgenommen werden. Ferner ist es auf einfache Weise möglich, beim Herausbiegen des Vorsprunges die Fläche, an welcher das Befestigungselement blockierend anliegt, der Form des Befestigungselementes genau anzupassen.

Anhand der Figuren soll die Erfindung näher erläutert werden. Es zeigt

Fig. 1 ein Ausführungsbeispiel eines Befestigungswinkels gemäß der Erfindung in Seitenansicht, der zum Anschrauben an einer Profilstange geeignet ist,

Fig. 2 einen Schnitt durch den Befestigungswinkel gemäß Fig. 1 längs der Linie A-B in Fig. 2,

Fig. 3 eine Ansicht des Befestigungswinkels in Fig. 1 von oben gesehen,

Fig. 4 eine andere Ausführungsform eines Befestigungswinkels gemäß der Erfindung,

Fig. 5 im Querschnitt und im verkleinerten Maßstab eine bekannte Profilstange zur Aufnahme eines Befestigungswinkels gemäß der Erfindung.

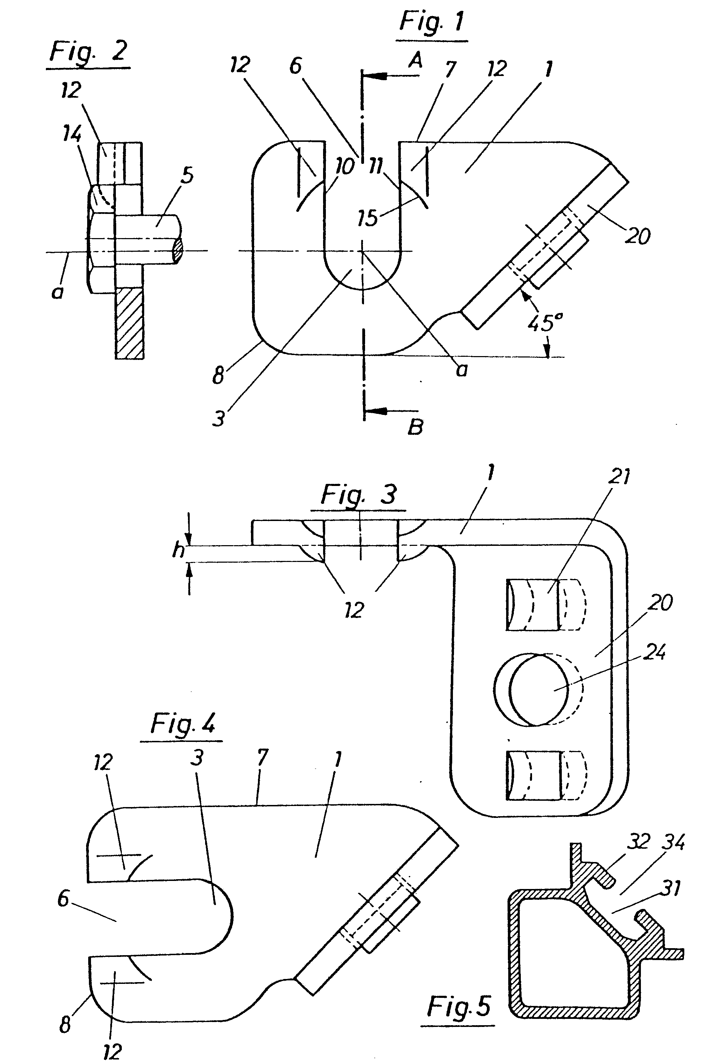

Der in den Fig. 1 bis 3 gezeigte Befestigungswinkel besteht aus zwei Flanschen 1 und 20, die in zwei senkrecht aufeinanderstehenden Ebenen liegen. Mit dem Flansch 20 kann der Winkel an der Verschiebenut einer in Fig. 5 im Schnitt dargestellten Profilstange befestigt werden. Die Profilstange in Fig. 5 ist gegenüber dem Befestigungswinkel im verkleinerten Maßstab (etwa die Hälfte) dargestellt. Solche Profilstangen werden zum Aufbau von Gehäuserahmen verwendet. Dabei bilden die Profilstangen, die in vertikaler und horizontaler Anordnung über geeignete Eckstücke miteinander verbunden sind, das Skelett eines Gehäuses. Der Flansch 20 des Befestigungswinkels liegt an der Seite 32 der Profilstange und wird durch eine mit ihrem Kopf in der Verschiebenut 31 liegenden Befestigungsschraube gehalten, die durch das Loch 24 geht und an gewünschter Stelle in Längsrichtung der Profilstange mittels einer Mutter festgesetzt wird, die zugleich den Flansch 20 gegen die Seite 32 der Profilstange preßt. Die aus der Ebene des Flansches 20 herausgedrückten Noppen 21 greifen in den Schlitz 34 der Verschiebenut, so daß der Befestigungswinkel gegen Verdrehen gesichert ist.

An dem anderen Flansch 1 des Befestigungswinkels befindet sich ein Befestigungsloch 3 zur Aufnahme einer Schraube 5. An diesen Flansch wird ein in das Profilstangengehäuse einzubauendes Element, z. B. ein Lüfter, festgeschraubt. Beim Einbau solcher Elemente ist häufig kein Platz vorhanden, um die Schraube 5 in Richtung der Lochachse a in das Loch 3 einzuführen. Aus diesem Grunde ist das Loch 3 über einen Schlitz 6 derart mit dem einen Rand des Flansches 1 verbunden, daß die beispielsweise bereits durch ein Loch am zu befestigenden Einbauelement hindurchgesteckte oder in ein Gewindeloch des Einbauelements leicht eingedrehte Schraube 5 über den Schlitz 6 durch eine im wesentlichen senkrecht zur Lochachse a verlaufende Bewegung in das Loch 3 eingeführt werden kann. Häufig erfolgt die Befestigung des Einbauelementes in der Weise, daß das Einbauelement, nachdem es in die gewünschte Lage gebracht worden ist, durch das Eigengewicht aus dieser wieder herausfallen kann, solange die Schraube 5 nicht festgezogen ist, was z. B. mittels einer Gegenmutter oder dem Gewindeloch im Einbauelement geschieht. Häufig werden die Einbauelemente auch zunächst an einer tiefer gelegenen Stelle an einer Profilstange so weit befestigt, daß sie danach um diese Befestigung herum nach oben geschwenkt werden können, um an einer zweiten oberen Stelle an einem Befestigungswinkel befestigt zu werden. Hier wird dann der Schraubbolzen in den Schlitz 6 des Befestigungswinkels eingeschwenkt.

Um das Herausfallen des Einbauelementes aus dem Befestigungswinkel vor der endgültigen Befestigung zu verhindern, ohne das Einbauelemente ständig in der eingeschobenen oder eingeschwenkten Lage im Befestigungswinkel mit Muskelkraft halten zu müssen, sind gemäß der Erfindung im Bereich der beiden Flanken 10 und 11 des Schlitzes 6 auf der einen Seite des Flansches 1 Vorsprünge 12 vorhanden. Die Vorsprünge liegen an der Seite, an der der Kopf 14 der Schraube 5 zu liegen kommt. Nachdem das Einbauelement mit der Schraube 5 in den Schlitz 6 eingeschoben worden ist, kann durch eine geringfügige Axialverschiebung der Schraube 5 erreicht werden, daß sich der Kopf 14 der Schraube beim Zurückrutschen des Einbauelementes aus dem Schlitz 6 gegen die Flächen 15 der Vorsprünge 12 anlegt, so daß das Einbauelement gehalten wird, obwohl die Schraube 5 noch nicht festgezogen worden ist.

Dank dieser erfindungsgemäßen Ausbildung des Befestigungswinkels kann eine einzige Person das Einbauelement mit dem Befestigungsbolzen in den Schlitz 6 hineinheben und es dann in dieser Lage blockieren. Die Bedienungsperson hat dann beide Hände frei, um die Befestigungsschraube festzuziehen. Die Flächen 15 der Vorsprünge, an denen die Befestigungsschraube anliegt, haben eine Bogenform, die dem Durchmesser des Schraubenkopfes angepaßt ist. Die Vorsprünge 12 im Ausführungsbeispiel werden durch einfaches seitliches Herausbiegen der Bereiche der Flanken 10 und 11 gebildet, die nahe dem Rand 7 des Flansches 1 liegen.

Fig. 4 zeigt einen Befestigungswinkel, bei welchem der das Loch 3 zum Flanschrand öffnende Schlitz 6 zu einer anderen Seite 8 des Flansches 1 führt als in Fig. 1.

Die Blockierung durch Anliegen des Kopfes 14 an die Vorsprünge 12 wird auch erreicht, wenn die Schraube mit einer Unterlegscheibe versehen ist, und diese an dem Vorsprung 12 anliegt. In der Regel sind die Vorsprünge 12 nur auf einer Seite des Flansches vorhanden. Es ist aber auch denkbar, Vorsprünge an beiden Seiten des Flansches vorzusehen, wenn der Flansch an der Stelle der Vorsprünge nicht gegen eine Fläche des Einbauelementes anliegen soll. In diesem Falle ist die Einsteckrichtung des Befestigungselementes von der Lage der Vorsprünge völlig unabhängig. Es ist selbstverständlich auch möglich, daß eine Schraube bereits derart durch ein Befestigungsloch am Einbauelement gesteckt ist und mit einer locker aufgesetzten Mutter versehen ist, daß beim Einbau die Mutter an den Vorsprüngen 12 des Befestigungswinkels zur Anlage kommt. Anstelle von Befestigungsschrauben kommen auch andere Befestigungsmittel wie beispielsweise Niete in Betracht. Im Prinzip genügt es auch, wenn nur im Bereich der einen Flanke 10 oder 11 ein Vorsprung am Befestigungsflansch vorhanden ist. Ein bei weitem sichereres Festhalten wird jedoch durch einen Vorsprung im Bereich jeder Flanke 10 und 11 erreicht.

Die Höhe h der Vorsprünge ist so zu wählen, daß ein sicheres Anliegen des Kopfes des Befestigungselementes oder der Unterlegscheibe erreicht wird.

## Patentansprüche

1. Befestigungswinkel mit einem ersten Flansch (20) zur Befestigung an einem tragenden Teil eines Gehäuses und mit einem zweiten Flansch (1), an dem ein zu tragendes Einbauelement mit einem Schraubbolzen, Niet oder einem ähnlichen Befestigungselement (5) befestigbar ist, wobei das zur Aufnahme des Befestigungselementes (5) bestimmte Loch im zweiten Flansch (1) durch einen Schlitz (6) zum Rand (7) des zweiten Flansches (1) hin derart offen ist, daß das am Einbauelement lose eingesteckte oder eingeschraubte Befestigungselement in einer Bewegung senkrecht zur Lochachse einführbar ist, wobei zumindest auf einer Seite der den Schlitz begrenzenden Flanschteile ein Vorsprung (12) vorhanden ist, der so gerichtet ist, daß nach einer Relativbewegung zwischen dem zweiten Flansch (1) und dem Befestigungselement (5) in Längsrichtung des Befestigungselementes die seitliche Bewegung des Befestigungselementes aus dem Schlitz (6) heraus blokkiert ist, dadurch gekennzeichnet, daß der zumindest eine Vorsprung (12) ein entlang einer im wesentlichen parallel zur Richtung des Schlitzes (6) verlaufenden Biegelinie aus der Ebene des Flansches (1) herausgebogener Bereich einer Flanke (10, 11) des Schlitzes (6) ist.

2. Befestigungswinkel nach Anspruch 1, dadurch gekennzeichnet, daß die zum Anliegen des Befestigungselementes (5) bestimmten Flächen (15) der Vorsprünge (12) dem Kreisdurchmesser des Kopfes (14) des Befestigungselementes (5) oder dessen Unterlegscheibe angepaßt sind.

3. Befestigungswinkel nach einem der Ansprüche 1 oder 2, dadurch gekennzeichnet, daß der erste Flansch (20) des Befestigungswinkels mit seiner Ebene senkrecht zur Ebene des zweiten Flansches (1) liegt und daß die Längsrichtung des Schlitzes (6) im zweiten Flansch (1) parallel zu einer Seite dieses Flansches (1) und unter 45° zur Ebene des ersten Flansches (20) verläuft.

## Claims

1. Angle bracket with a first flange (20) for attaching said bracket to a supporting portion of a housing and with a second flange (1) to which a mounting unit to be carried by the housing is attachable by means of a screw bolt, a rivet or a similar fastening element (5), whereby a hole in the second flange (1) provided to accomodate the fastening element (5) is open up to the edge (7) of the second flange via a slot (6) in such a way that the fastening element, being loosely inserted or screwed into the mounting unit can be inserted by a movement perpendicular to the axis of said hole, whereby at least on one side of the flange portions confining the slot provision is made for a projection (12) extending such that after performing a relative movement between the second flange (1) and the fastening element (5) in the longitudinal direction of the fastening element the lateral movement of the fastening element out of the slot (6) is blocked, characterized in that said at least one projection (12) is formed by a section of one of the flange-confining portions (10, 11) of the slot (6) which section is bent out of the plane of said flange about a bending line extending substantially parallel to the direction of said slot (6).

2. Angle bracket according to claim 1, characterized in that the surface (15) of the projections (12) intended for the contact with the fastening element (5) are adjusted to the diameter of the head portion (14) of the fastening element (5) or its washer.

3. Angle bracket according to claim 1 or 2, characterized in that said first flange (20) of the angle bracket is positioned with its plane perpendicular to the plane of the second flange (1) and that the longitudinal direction of said slot (6) in said second flange (1) extends parallel to one edge of said flange (1) and is inclined to the first flange (20) at an angle of 45°.

## Revendications

1. Equerre de fixation comprenant une première branche (20) pour la fixation sur une paroi portante d'une enveloppe et une seconde branche (1) sur laquelle peut être fixé par un boulon fileté, par un rivet ou par un élément de fixation (5) similaire un élément rapporté à supporter, le trou destiné à la réception de l'élément de fixation (5) et ménagé dans la seconde branche (1) étant ouvert par une fente (6) vers le bord (7) de la seconde branche (1) de manière à pouvoir introduire l'élément de fixation, engagé ou boulonné de manière lâche sur l'élément rapporté, par un mouvement perpendiculaire à l'axe du trou, une saillie (12) étant prévue au moins sur un côté des parties de la branche qui délimitent la fente et étant dirigée de manière à bloquer, après un mouvement relatif de la seconde branche (1) et de l'élément de fixation (5) dans la direction longitudinale de l'élément de fixation, toute sortie de l'élément de fixation hors de la fente (6) par déplacement latéral, caractérisé en ce que la saillie (12), au moins au nombre de une, est une région d'un flanc (10, 11) de la fente (6), dégagée hors du plan de la branche (1) le long d'une ligne courbe s'étendant parallèlement à la direction de la fente (6).

2. Equerre de fixation suivant la revendication 1, caractérisé en ce que les surfaces (15) des saillies (12) destinées à venir au contact avec l'élément de fixation (5) sont adaptées au diamètre du cercle de la tête (14) de l'élément de fixation (5) ou de sa rondelle.

3. Equerre de fixation suivant l'une des revendications 1 ou 2, caractérisé en ce que le plan de la première branche (20) de l'équerre de fixation est perpendiculaire au plan de la seconde branche (1), et en ce que la direction longitudinale de la fente (6) ménagée dans la seconde branche (1) est parallèle à un côté de cette branche (1) et s'étend à 45° par rapport au plan de la première branche (20).

0 033 150

Fig. 1

Fig. 2

Fig. 3

Fig. 4

Fig. 5